# EUROPÄISCHE PATENTANMELDUNG

(11) **EP 0 752 333 A2**
(43) Veröffentlichungstag der Anmeldung: **08.01.1997**
(21) Anmeldenummer: 96109455.4
(22) Anmeldetag: 13.06.1996
(51) Int. Cl.: B60H 1/00

(54) **Aktuatoranordnung und diese verwendende Vorrichtung**

(30) Priorität: 01.07.1995 DE 19524068
(71) Anmelder: Behr GmbH & Co., 70469 Stuttgart (DE)
(72) Erfinder: Drobner, Hans Jürgen, 71229 Leonberg (DE)
(74) Vertreter: Wilhelm & Dauster Patentanwälte European Patent Attorneys

(57) **Zusammenfassung**

2.1 Bei Heizungs- oder Klimaanlagen von Kraftfahrzeugen ist es bekannt, mehrere Stellglieder in Form von Klappen oder Ventilen mittels Aktuatoren zu betätigen, die jeweils einzeln dem jeweiligen Stellglied zugeordnet an der Heizungs- oder Klimaanlage angebracht sind.
2.2 Es wird eine Aktuatoranordnung vorgeschlagen, bei der die Aktuatoren (2 bis 8) in einer gemeinsamen Aktuatormoduleinheit vormontiert angeordnet sind. Die Aktuatormoduleinheit kann dann insgesamt in eine entsprechende Vorrichtung, wie eine Heizungs- oder Klimaanlage, in der die Aktuatoren benötigt werden, eingebaut werden. Damit läßt sich eine platzsparende sowie montage- und wartungsfreundliche Anordnung von benötigten Aktuatoren realisieren.
2.3 Verwendung z.B. bei Heizungs- oder Klimaanlagen von Kraftfahrzeugen.

## Beschreibung

Die Erfindung bezieht sich auf eine Aktuatoranordnung mit mehreren Aktuatoren zur Betätigung von Stellgliedern sowie auf eine Vorrichtung, die eine derartige Aktuatoranordnung verwendet. Vorrichtungen dieser Art sind beispielsweise Heizungs- und Klimaanlagen von Kraftfahrzeugen, bei denen als Stellglieder eine Mehrzahl von Luftklappen und Ventilen angeordnet sind, die von zugehörigen Aktuatoren betätigt werden.

Für Heizungs- und Klimaanlagen von Kraftfahrzeugen ist es bekannt, jeden Aktuator für eine Luftklappe oder ein Ventil separat an jeweiligen Gehäuse- oder sonstigen Trägerabschnitten der Vorrichtung anzubringen. Eine hierfür geeignete Befestigungsanordnung ist in der Offenlegungschrift EP 0 193 794 A2 beschrieben. Bei dieser Vorgehensweise der Einzelmontage jedes Aktuators ist in der Nähe jedes Stellgliedes ausreichend Platz zur Anbringung des zugehörigen Aktuators erforderlich, und die Aktuatoren können meist erst während oder nach Ihrer Befestigung in der Nähe des zugehörigen Stellgliedes mit einer sie ansteuernden Steuereinheit verbunden werden. So muß z.B. im Fall von Stellmotoren als Aktuatoren jeder Stellmotor einzeln bei oder nach seiner Anbringung an der vorgesehenen Stelle noch elektrisch mit einer Leistungsversorgung und einem Steuergerät verbunden werden. Da sich die Stellmotoren herkömmlicherweise meist an sehr unterschiedlichen, räumlich entfernten Stellen der Heizungs- oder Klimaanlage befinden, ist zudem entsprechend viel Verkabelungsmaterial erforderlich.

Der Erfindung liegt als technisches Problem die Bereitstellung einer mit vergleichsweise geringem Aufwand realisierbaren, platzsparenden sowie montage- , demontage- und servicefreundlichen Aktuatoranordnung und einer diese verwendenden Vorrichtung zugrunde.

Dieses Problem wird durch eine Aktuatoranordnung mit den Merkmalen des Anspruchs 1 sowie durch eine Vorrichtung mit den Merkmalen des Anspruchs 5 gelöst. Bei der Aktuatoranordnung nach Anspruch 1 sind die Aktuatoren in einer gemeinsamen Aktuatormoduleinheit vormontiert angeordnet. Die Aktuatormoduleinheit kann dann insgesamt als Teil einer Vorrichtung gemäß Anspruch 5, welche diese Aktuatoren benötigt, am übrigen Teil der Vorrichtung angebracht werden. Die Zusammenfassung der Aktuatoren in Form der Aktuatormoduleinheit ermöglicht eine Platzersparnis gegenüber einer separaten Anbringung der Aktuatoren an unterschiedlichen Stellen der Vorrichtung. Während bei der herkömmlichen Einzelanbringung von Aktuatoren selbige wegen ihres sehr ähnlichen Aussehens häufig verwechselt werden, wodurch unnötiger Montagezusatzaufwand entsteht, ist diese Verwechslungsgefahr bei der übersichtlichen Vormontage aller benötigten Aktuatoren in der gemeinsamen Aktuatormoduleinheit deutlich geringer, so daß sich gegebenenfalls auch der Aufwand zur Gewährleistung einer korrekten Aktuatorzuordnung mittels beispielsweise mechanischer Kodierung reduzieren läßt. Ein weiterer Vorteil der modulartigen Zusammenfassung der Aktuatoren besteht darin, daß alle Aktuatoren bereits in der Aktuatormoduleinheit vor Anbringen derselben an der sie benutzenden Vorrichtung auf ihre Funktionstüchtigkeit hin geprüft und gegebenenfalls in einfacher Weise ersetzt werden können. Nach Anbringung der Aktuatormoduleinheit an der zugehörigen Vorrichtung brauchen dann nur noch die Betätigungsglieder für die Stellglieder an die Aktuatoren angekoppelt und gegebenenfalls die Aktuatormoduleinheit an eine aktuatoransteuernde Zuführung angeschlossen werden.

In Weiterbildung der Erfindung nach Anspruch 2 ist für die Aktuatoren eine zentrale Steuereinheit vorgesehen, die ebenfalls in der Aktuatormoduleinheit vormontiert angeordnet ist. Auf diese Weise können die Aktuatoren über diese Steuereinheit vorab funktionsgeprüft werden. Außerdem können alle Steuerungsverbindungen zwischen der Steuereinheit und den Aktuatoren während der Vormontage der Aktuatormoduleinheit hergestellt werden, wobei wegen der modulartigen Zusammenfassung der Aktuatoren vorteilhaft kurze Verbindungswege vorliegen. Bei der Montage der Aktuatormoduleinheit an der zugehörigen Vorrichtung braucht erstere dann meist nur noch an eine zentrale externe Zuführung angeschlossen werden, was im Fall von elektrisch betriebenen Aktuatoren und einer elektrischen Steuereinheit nur einen vergleichsweise geringen Aufwand an Leitungsmaterial und Verkabelungsmaßnahmen zur Herstellung der benötigten elektrischen Verbindungen erfordert.

In Weiterbildung der Erfindung nach Anspruch 3 beinhaltet die Aktuatormoduleinheit eine Trägerplatte, auf der die Aktuatoren vormontiert angeordnet sind. Diese beispielsweise im wesentlichen ebene Trägerplatte kann dann mit wenig Aufwand an der zugehörigen Vorrichtung, z.B. am Gehäuse einer Heizungs- oder Klimaanlage eines Kraftfahrzeuges, montiert werden. Hierfür kann bereits eine bei Bedarf vibrations- und/oder geräuschgedämpfte 3-Punkt-Halterung der Trägerplatte genügen, so daß durch Lösen von lediglich drei mechanischen Verbindungen alle Aktuatoren, z.B. für Service- oder Diagnosezwecke, von der Vorrichtung abgenommen werden können.

Eine Weiterbildung der Erfindung nach Anspruch 4 hat den Vorteil, daß die Trägerplatte nicht nur zur Halterung der Aktuatoren dient, sondern gleichzeitig mit den entsprechenden, den jeweiligen Aktuatoren zugeordneten Bereichen einen Gehäuseteil für die Aktuatoren bereitstellt. Alternativ zu einer Vormontage, bei der die Aktuatoren zunächst einschließlich ihrer Gehäuseteile zusammengebaut und dann mit ihrem Gehäuse an der Trägerplatte montiert werden, ist es durch diese Ausgestaltung möglich, den Aktuator direkt am entsprechenden Trägerplattenbereich zusammenzubauen, der dann als ein erster Gehäuseteil fungiert, und anschließend zum Abschluß der Aktuatorvormontage ein zweites Gehäuseteil aufzusetzen und an der Trägerplatte festzulegen. Dies spart Montageaufwand sowie ein jeweiliges Gehäuseteil ein.

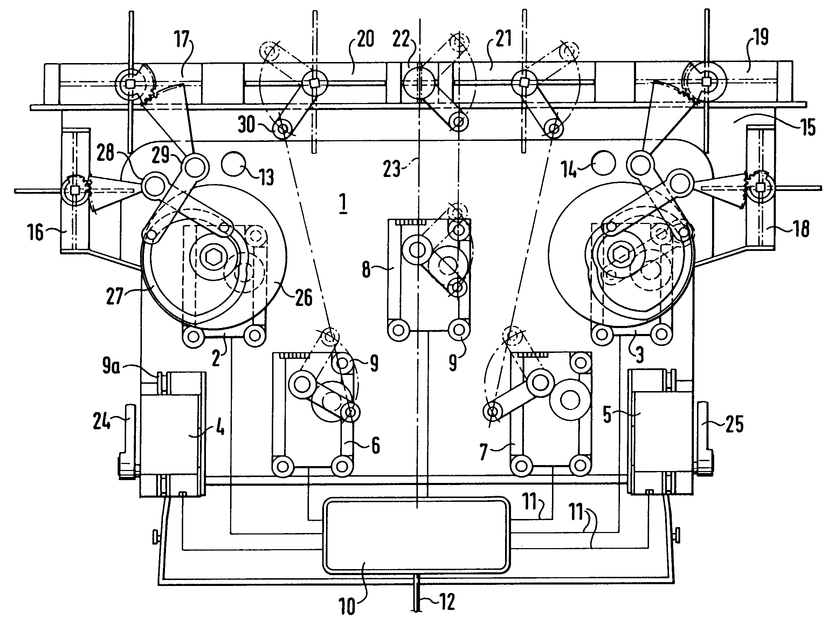

Eine bevorzugte Ausführungsform der Erfindung ist in der Zeichnung dargestellt und wird nachfolgend beschrieben.

Die einzige Figur zeigt eine schematische Draufsicht auf eine in einer Klimaanlage eines Kraftfahrzeuges verwendete Aktuatormoduleinheit mit Aktuatorträgerplatte.

Beim gezeigten Ausführungsbeispiel ist eine Aktuatormoduleinheit dadurch gebildet, daß sieben Aktuatoren (2 bis 8) in Form elektrischer Stellmotoren auf einer Trägerplatte (1) vormontiert angeordnet sind, wobei sie jeweils mit ihrem Gehäuse über gummigepufferte und dadurch vibrations- und geräuschgedämpfte Schraubverbindungen (9) an der Trägerplatte (1) befestigt sind. Die Anordnung der Aktuatoren ist im wesentlichen symmetrisch zu einer Trägerplattenlängsachse (23), wobei fünf Aktuatoren (2, 3, 6, 7, 8) auf der gezeigten Trägerplattenoberseite und zwei Aktuatoren (4, 5) seitlich an der Trägerplatte (1) vormontiert sind. Die leicht überschaubare Anordnung der Aktuatoren (2 bis 8) auf der gemeinsamen Trägerplatte (1) verringert gegenüber der herkömmlichen Einzelanbringung der Aktuatoren an verschiedenen Stellen eines Klimaanlagengehäuses die Gefahr, daß ein Aktuator an einer falschen Stelle montiert wird. Weiter ist erkennbar, daß die Aktuatoren (2 bis 8) durch ihre zusammengefaßte Anordnung auf der gemeinsamen Trägerplatte (1) sehr kompakt und platzsparend untergebracht sind.

Die vormontierte Aktuatormoduleinheit beinhaltet des weiteren ein ebenfalls an der Aktuatorträgerplatte (1) angebrachtes, zentrales elektrisches Steuergerät (10), das die einzelnen Aktuatoren (2 bis 8) über ein elektrisches Leitungssystem (11) ansteuert, das außerdem die Stromversorgungsleitungen für die Aktuatoren (2 bis 8) umfaßt. Auch dieses Leitungssystem (11) wird bereits vorab während der Vormontage der Aktuatormoduleinheit unter Verwendung jeweiliger Leiterkabel fertiggestellt. Alternativ können diese elektrischen Leitungsverbindungen auch als in die Trägerplatte (1) integrierte Leiterbahnen gebildet sein, wozu die Trägerplatte (1) dann leiterplattenartig ausgelegt wird. In diesem Fall können dann die elektrischen Kontaktierungen der Aktuatoren (2 bis 8) sowie des Steuergerätes (10) gegebenenfalls automatisch mit der Befestigung derselben auf der Trägerplatte (1) erfolgen. Des weiteren kann bei Bedarf das Steuergerät (10) als direkt auf der Aktuatorträgerplatte aufgebaute Elektronikeinheit realisiert sein. Über einen zentralen elektrischen Anschluß (12) der Trägerplatte (1) ist das zentrale Aktuatorsteuergerät (10) der Klimaanlage an ein steuergerätevernetzendes Datenbussystem der fahrzeugelektrischen Anlage, z.B. ein CAN-Bussystem, sowie zusammen mit den Aktuatoren (2 bis 8) an die elektrische Bordstromversorgung angeschlossen.

Die vormontierte Aktuatormoduleinheit wird dann an einem hierfür vorgesehen Befestigungsabschnitt der Klimaanlage in einfacher Weise mittels einer lösbaren 3-Punkt-Befestigung angebracht, wobei von diesem Befestigungsabschnitt der Übersichtlichkeit halber nur ein Stellgliedabschnitt (15) explizit gezeigt ist, so daß in der Figur noch zwei (13, 14) der drei Befestigungspunkte zu erkennen sind. Vorzugsweise sind auch an diesen drei Befestigungspunkten für die Aktuatorträgerplatte (1) geräusch- und/oder vibrationsdämpfende Mittel, z.B. Gummipuffer, vorgesehen. In dem dargestellten Stellgliedabschnitt (15) des Klimaanlagengehäuses befinden sich sieben Stellglieder (16 bis 22) in Form von Luftklappeneinheiten für herkömmliche Belüftungsfunktionen, wie Kalt- und Warmluft, Luftführung zur Windschutzscheibe, in den Fußraum und zu den Seitenscheiben etc.. Zwei weitere Luftklappeneinheiten der Klimaanlage sind in der gezeigten Ansicht nicht zu erkennen und werden von den beiden seitlich an der Trägerplatte (1) angeordneten Aktuatoren (4, 5) über nur noch teilweise dargestellte Betätigungsglieder (24, 25) betätigt. Die Stellglieder (16 bis 22) sind ebenso wie die Aktuatoren (2 bis 8) im wesentlichen symmetrisch zu der genannten Längsachse (23) angeordnet, wobei sie Belüftungsfunktionen für die jeweilige Fahrzeugseite, d.h. die Fahrer- oder die Beifahrerseite, wahrnehmen. Die Luftklappen (16 bis 22) werden von den zugehörigen Aktuatoren (2 bis 8) über jeweilige Betätigungsglieder betätigt, die nach Anbringung der Trägerplatte (1) am Befestigungsabschnitt der Klimaanlage montiert werden. Es sind beliebige herkömmliche Betätigungsglieder verwendbar. Im gezeigten Fall steuert beispielsweise ein Aktuator (6) eine zugehörige Luftklappeneinheit (20) über einen Kniehebelmechanismus (30) an. Bei einem weiteren Aktuator (2) ist eine Kurvenscheibe (26) vorgesehen, in die eine exzentrische, geschlossene Kurve (27) eingebracht ist. In diese Kurve (27) greift ein Drehhebelmechanismus (28) mit einem Ende ein, und die entstehende Hebeldrehung wird über ein Zahnscheibensegment am anderen Ende des Drehhebelmechanismus (28) auf ein korrespondierendes Zahnscheibensegment übertragen, das drehfest auf der Welle einer weiteren Luftklappeneinheit (16) sitzt.

Die Anbindung der Aktuatoren (2 bis 8) an die gemeinsame Steuereinheit (10) ermöglicht es gegebenenfalls mehrere Stellglieder mit einem einzigen Aktuator zu betätigen. Dies ist insbesondere zur Durchführung von Klappenbewegungen günstig, die in funktionalem Zusammenhang miteinander stehen. Dieser Fall tritt bei Klimaanlagen häufig auf, da zur Erfüllung der verschiedenen Heizungs-, Belüftungs- und Klimatisierungsfunktionen häufig mehrere Luftklappen gleichzeitig in bestimmte, zweckentsprechende Stellungen gebracht werden müssen. Eine solche Mehrfachbetätigung mehrerer Stellglieder ist bei der gezeigten Klimaanlage bei dem erwähnten Aktuator (2) mit der Kurvenscheibe (26) und entsprechend bei dem symmetrisch gegenüberliegenden Aktuator (3) realisiert, indem neben dem erwähnten Drehhebelmechanismus (28) ein zweiter Drehhebelmechanismus (29) in die exzentrische, geschlossene Kurve (27) endseitig eingreift und die resultierende Drehbewegung auf eine weitere Luftklappeneinheit (17) überträgt.

Das gezeigte System realisiert ersichtlich eine sehr platzsparende Aktuatorunterbringung, so daß das Gehäuse der Klimaanlage entsprechend klein gebaut werden kann, ohne die Anbringung der Aktuatoren zu erschweren. Das System ist sehr montage- und demontagefreundlich. Sämtliche benötigten Aktuatoren (2 bis 8) sind insgesamt mit ihrem zentralen Steuergerät (10) und den elektrischen Verbindungen auf einer gemeinsamen Trägerplatte (1) vormontiert, die einfach lösbar am Gehäuse oder einem Rahmenteil der Klimaanlage befestigt werden kann, so daß anschließend nur noch jedes Betätigungsglied montiert und die Trägerplatte (1) elektrisch angeschlossen zu werden braucht. Entsprechend einfach gestaltet sich die Demontage der Aktuatormoduleinheit zu Service- oder Diagnosezwecken oder zwecks Austausch derselben. Die Vormontage aller Aktuatoren (2 bis 8) zusammen mit dem zentralen Steuergerät (10) hat des weiteren den Vorteil, daß die Funktion aller Aktuatoren (2 bis 8) vorab an der Aktuatorträgerplatte (1) außerhalb des Fahrzeugs geprüft werden kann, bevor die Aktuatormoduleinheit in die Klimaanlage eingebaut wird. Es zeigt sich zudem, daß die genannten Vorteile insgesamt dazu führen, daß sich die Klimaanlage preiswerter fertigen läßt als mit der herkömmlichen Einzelanbringung der verschiedenen Aktuatoren.

Es versteht sich, daß die in den Ansprüchen festgelegte Erfindung zahlreiche Modifikationen des gezeigten Ausführungsbeispiels umfaßt. So können alternativ anstelle der Anbringung auf einer im wesentlichen ebenen Trägerplatte die Aktuatoren auch innerhalb eines gemeinsamen Aktuatormodulgehäuses zur Aktuatormoduleinheit zusammengefaßt sein. Des weiteren kann vorgesehen sein, die Aktuatoren unter Einsparung eines jeweiligen Gehäuseteils direkt auf dem entsprechenden Trägerplattenbereich, der dann die Funktion eines Aktuatorgehäuseteils übernimmt, vorzumontieren und am Schluß der Vormontage ein zweites Gehäuseteil aufzusetzen und an der Trägerplatte zu fixieren. Anstelle elektrischer Stellmotoren können auch pneumatische oder hydraulische Stellantriebe verwendet werden, wobei jeweils die Art der Aktuatoransteuerung und der stellgliedankoppelnden Betätigungsglieder geeignet zu wählen ist. Selbstverständlich ist die Erfindung nicht auf Heizungs- oder Klimaanlagen von Kraftfahrzeugen beschränkt, vielmehr kommt ihre Verwendung auch in beliebigen anderen Systemen in Betracht, in denen mehrere Stellglieder vorhanden sind, die von zugehörigen Aktuatoren betätigt werden.

## Patentansprüche

1. Aktuatoranordnung mit mehreren Aktuatoren (2 bis 8) zur Betätigung von Stellgliedern (16 bis 22),
dadurch gekennzeichnet, daß
die Aktuatoren (2 bis 8) in einer gemeinsamen Aktuatormoduleinheit vormontiert angeordnet sind.

2. Aktuatoranordnung nach Anspruch 1, weiter gekennzeichnet durch eine in der Aktuatormoduleinheit vormontiert angeordnete, zentrale Steuereinheit (10) zur Ansteuerung der Aktuatoren (2 bis 8).

3. Aktuatoranordnung nach Anspruch 1 oder 2, weiter dadurch gekennzeichnet, daß die Aktuatormoduleinheit eine Trägerplatte (1) beinhaltet, an der die Aktuatoren (2 bis 8) vormontiert sind.

4. Aktuatoranordnung nach Anspruch 3, weiter dadurch gekennzeichnet, daß der den jeweiligen Aktuator (2 bis 8) zugeordnete Bereich der Trägerplatte (1) einen Teil eines Gehäuses für den betreffenden Aktuator bildet.

5. Vorrichtung mit mehreren Aktuatoren (2 bis 8) und von diesen betätigbaren Stellgliedern (16 bis 22), insbesondere Heizungs- oder Klimaanlage eines Kraftfahrzeuges,
gekennzeichnet durch
eine Aktuatoranordnung nach einem der Ansprüche 1 bis 4, wobei die in der Aktuatormoduleinheit vormontiert angeordneten Aktuatoren (2 bis 8) über jeweilige Betätigungsglieder (28, 29, 30) mit ihren zugeordneten Stellgliedern (16 bis 22), die sich außerhalb der Aktuatormoduleinheit befinden, gekoppelt sind.
